# FASCICULE DE BREVET EUROPEEN

(11) **EP 0 990 128 B1**
(45) Date de publication et mention de la délivrance du brevet: **24.08.2005**
(21) Numéro de dépôt: 99910415.1
(22) Date de dépôt: 19.03.1999
(51) Int. Cl.: G01L 9/04, G01L 1/22

(54) **CAPTEUR DE PRESSION AVEC COMPENSATION DE LA NON-LINEARITE DE LA DERIVE DE ZERO AUX TRES BASSES TEMPERATURES**
DRUCKWANDLER MIT KOMPENSATION DER NICHTLINEARITÄT DER NULLDRIFT FÜR TIEFE TEMPERATUREN
PRESSURE SENSOR WITH COMPENSATION FOR NULL SHIFT NON-LINEARITY AT VERY LOW TEMPERATURES

(30) Priorité: 20.03.1998 FR 9803437
(43) Date de publication de la demande: 05.04.2000
(73) Titulaire: Snecma Propulsion Solide, 33187 Le Haillan Cedex (FR)
(72) Inventeur: AVISSE, Jean-Bernard, F-33480 Castelneau de Médoc (FR)
(74) Mandataire: Joly, Jean-Jacques
(86) Numéro de dépôt international: PCT/FR1999/000637
(87) Numéro de publication internationale: WO 1999/049288

(56) Documents cités:
- FR-A- 2 497 346
- PATENT ABSTRACTS OF JAPAN vol. 011, no. 337 (P-633), 5 novembre 1987 & JP 62 121302 A (KYOWA ELECTRONIC INSTR CORP LTD), 2 juin 1987
- PATENT ABSTRACTS OF JAPAN vol. 005, no. 040 (E-049), 17 mars 1981 & JP 55 163880 A (HITACHI LTD), 20 décembre 1980

## Description

### Domaine de l'invention

La présente invention concerne un capteur de pression du type comportant des jauges extensométriques montées respectivement dans les branches d'un pont de Wheatstone.

Le domaine plus particulièrement visé est celui des capteurs de pression utilisables à de très basses températures, typiquement des températures inférieures à celle d'ébullition de l'azote, et pouvant descendre jusqu'à quelques Kelvin. Arrière-plan de l'invention

Un problème bien connu des capteurs de pression à jauges extensométriques montées en pont de Wheatstone est celui de la dérive de zéro du pont en fonction de la température.

Pour résoudre ce problème, il est généralement fait appel à des réseaux de compensation branchés aux entrées et/ou sorties du pont. Ces réseaux, qui utilisent au moins un élément sensible à la température, sont habituellement conçus pour réaliser une compensation de type linéaire, la dérive thermique des ponts de jauges étant sensiblement linéaire dans les plages de températures usuelles.

JP-A-62 121 302 décrit un circuit à quatre jauges montées dans les branches d'un pont de Wheatstone. Dans un sommet du pont, deux éléments résistifs disposés en parallèle sont prévus pour compenser la dérive du pont en fonction de la température.

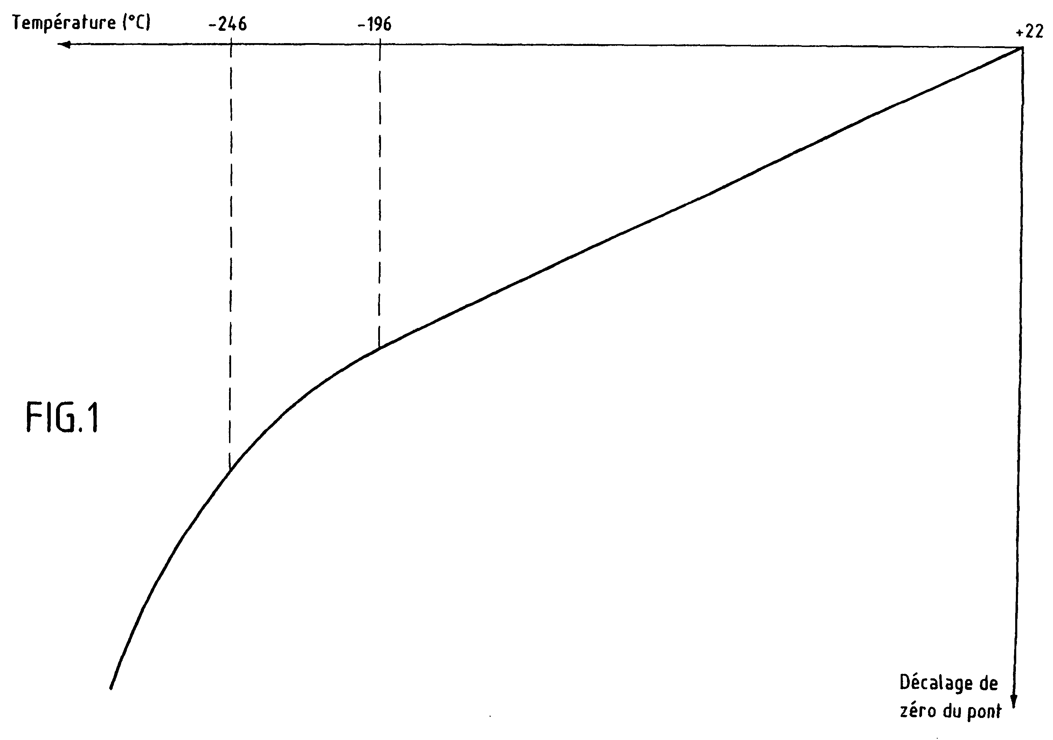

Une difficulté supplémentaire surgit lorsque les capteurs de pression sont utilisés aux très basses températures. En effet, la dérive thermique des ponts de jauges devient non linéaire, et cette non-linéarité s'accroît lorsque la température décroît. Cela est illustré par la figure 1 qui montre l'évolution en fonction de la température de la tension de sortie d'un pont de jauges formées par des dépôts de nickel-chrome en couche mince sur un substrat en silicium, le pont étant équilibré (tension de sortie nulle) pour une température de 22°C.

Les réseaux de compensation usuels deviennent inefficaces, et ce d'autant que les thermistances utilisées habituellement présentent souvent une résistance qui devient extrêmement élevée, quasi infinie, lorsque la température devient inférieure à -40°C ou -50°C.

Le problème que vise à résoudre la présente invention est de compenser la non-linéarité de la dérive thermique et, par conséquent, de "linéariser" celle-ci aux très basses températures, en particulier aux températures inférieures au point d'ébullition de l'azote, c'est-à-dire inférieures à -196°C environ.

### Brève description de l'invention

Ce problème est résolu grâce à un capteur de pression tel que défini dans la revendication 1.

La résistance sur laquelle le circuit de compensation est branché en parallèle a une valeur très inférieure à celle de la jauge extensométrique, afin de ne pas pénaliser l'étendue de la plage de fonctionnement et la sensibilité du pont. Par valeur très inférieure, on entend ici une valeur inférieure à 1/20, voire 1/100 ou moins de la résistance d'une jauge extensométrique.

Selon une caractéristique du capteur de pression conforme à l'invention, le circuit de compensation est branché en parallèle sur une résistance formée par un brin de connexion reliant la jauge extensométrique à un sommet du pont.

Ainsi, aucune modification du pont n'est nécessaire pour insérer le circuit de compensation. On évite ainsi les instabilités qui pourraient être engendrées si une ouverture du pont était nécessaire à cet effet.

En outre, le circuit de compensation de non-linéarité peut ainsi être placé au plus près du pont, donc être exposé exactement aux mêmes conditions de température que le pont.

Pour compenser la non-linéarité dans le domaine des très basses températures, c'est-à-dire en deçà de -196°C, l'élément résistif du circuit de compensation doit avoir une résistance telle qu'elle influence celle de la résistance sur lequel il est branché en parallèle, et ce de façon croissante lorsque la température diminue. A cet effet, il est préférable que le rapport entre la résistance de l'élément résistif et celle de la résistance sur laquelle il est branché en parallèle soit au plus égal à 100, lorsque la température devient inférieure à -196°C, et diminue ensuite lorsque la température décroît. Un tel élément résistif est par exemple constitué par une sonde en platine.

### Brève description des dessins

Dans les dessins annexés,
- la figure 1 illustre la variation, en fonction de la température, de la dérive de zéro d'un capteur de pression formé par un pont de jauges extensométriques, en l'absence de compensation de dérive,
- la figure 2 est un schéma électrique d'un mode de réalisation d'un capteur de pression conforme à l'invention, et
- la figure 3 illustre la variation, en fonction de la température, de la dérive de zéro du capteur de pression de la figure 1, muni d'un circuit de compensation de non-linéarité de dérive thermique, conformément à l'invention.

### Description détaillée d'un mode de réalisation préféré

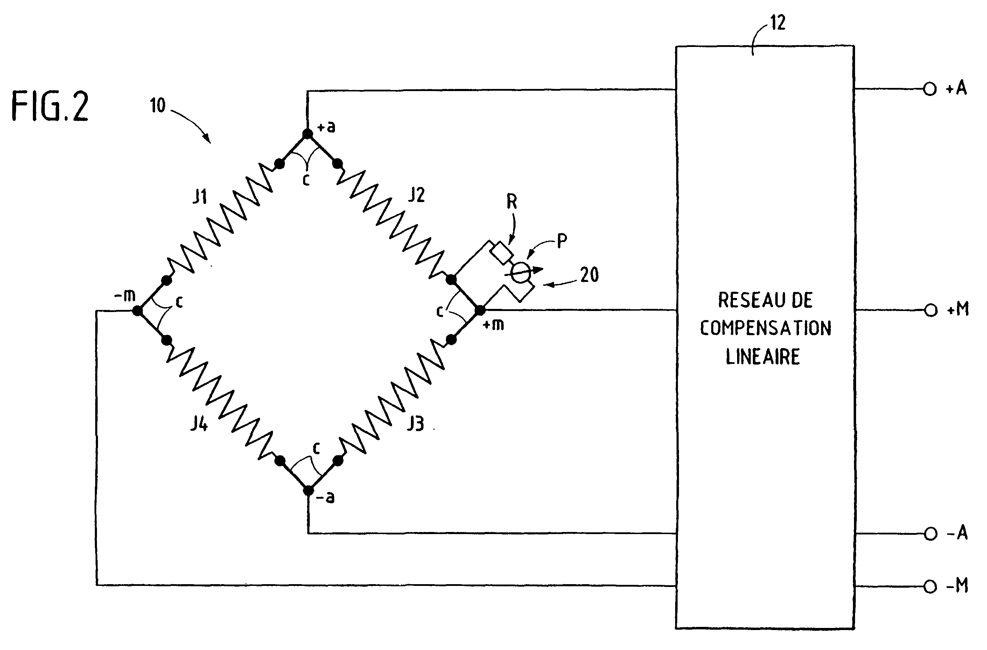

La figure 2 illustre le schéma d'un capteur de pression comprenant quatre jauges extensométriques J1, J2, J3, J4 insérées respectivement dans les quatre branches d'un pont de Wheatstone 10. Les jauges J1 à J4 sont reliées chacune à deux sommets adjacents du pont par des brins de connexion c.

Les jauges J1 à J4 et les brins de connexion c sont formés par des dépôts métalliques sur un substrat, par exemple en silicium, faisant partie de l'élément sensible du capteur. De façon bien connue, deux jauges montées dans deux branches opposées du pont sont disposées sur le substrat de manière à être sollicitées en extension, lorsque le substrat est soumis à une pression à mesurer, tandis que les deux autres jauges sont disposées de manière à être sollicitées en compression.

Les jauges J1 à J4 sont par exemple formées par des dépôts en nickel-chrome, aussi identiques que possible, tandis que les brins de connexion c sont par exemple formés par des dépôts en or, également aussi identiques que possible.

Les dépôts sont réalisés en couche mince, par exemple par projection sous vide, la fermeture du pont étant réalisée par les dépôts réalisés.

Deux sommets opposés +a et -a du pont sont reliés à des bornes d'alimentation +A et -A tandis que les deux autres sommets +m et -m sont reliés à des bornes de mesure +M et -M. Un réseau de compensation 12 est interposé entre les sommets +a, -a, +m, -m d'une part, et les bornes +A, -A, +M, -M, d'autre part. Le réseau de compensation 12 vise à réaliser une compensation de dérive linéaire du capteur de pression en fonction de la température. Il s'agit d'un réseau résistif, de type bien connu en soi, par exemple tel que décrit dans le document FR-A 2 613 833.

Un circuit 20 de compensation de non-linéarité de dérive de zéro du pont est branché en parallèle sur un brin de connexion c reliant une des jauges du pont, par exemple la jauge J2, à l'un des deux sommets du pont situé aux extrémités de la branche contenant la jauge, par exemple le sommet +m.

Le circuit de compensation 20 comprend un élément résistif P dont la résistance est variable en fonction de la température, en particulier dans le domaine des très basses températures, c'est-à-dire, typiquement, les températures inférieures au point d'ébullition de l'azote (-196°C). Une résistance de réglage R peut être branchée en série avec l'élément résistif P, dans le circuit de compensation, afin de permettre un ajustage de la compensation réalisée.

Le montage de l'élément résistif en parallèle sur une partie constitutive de la résistance totale d'une branche du pont permet d'influencer de façon non linéaire le comportement du pont, donc de réaliser une compensation de non-linéarité de dérive. Lorsque cette non-linéarité s'accroît au fur et à mesure que la température décroît, l'influence de l'élément résistif P doit croître, donc sa résistance décroître de sorte que le rapport entre cette résistance et celle d'un brin de connexion c devienne au plus égal à 100 lorsque la température devient inférieure à -196°C et diminue lorsque la température décroît en deçà de -196°C. On utilise alors un élément résistif P ayant un coefficient de température positif, par exemple une sonde en platine.

Un capteur de pression tel qu'illustré par la figure 2 a été réalisé avec des jauges extensométriques formées par un dépôt en couche mince de nickel-chrome, chaque jauge ayant une résistance de 1 000 Ω à température ambiante (22°C). Les brins de connexion c sont des dépôts linéaires d'or en couche mince ayant chacune une résistance de 0,6 Ω à 22°C.

La figure 1 montre l'évolution de la tension recueillie aux sommets +m, -m du pont en l'absence de contraintes sur le capteur, et en l'absence du réseau de compensation 12 et du circuit de compensation 20, l'équilibre du pont (tension de sortie nulle) étant réalisé à 22°C.

On constate que la dérive de zéro du pont, due essentiellement aux jauges, devient de plus en plus prononcée au fur et à mesure que la température décroît. Jusqu'à environ -140°C, la dérive est sensiblement linéaire. Vers les plus basses températures, la non-linéarité de la dérive devient de plus en plus perceptible.

Un circuit de compensation constitué d'une sonde en platine P de résistance égale à 100 Ω à 0°C en série avec une résistance de réglage R est placé en parallèle sur le brin de connexion en or reliant la jauge J2 au sommet +m du pont.

Le tableau 1 ci-dessous montre les valeurs des résistances d'un brin de connexion c et de la sonde P, la résistance de réglage R étant nulle ainsi que de la résistance équivalente du circuit parallèle formé par P et c, à différentes températures. Le rapport entre les résistances de la sonde P et du brin de connexion c passe de 47 environ à 7,9 environ entre -196°C et -246°C.

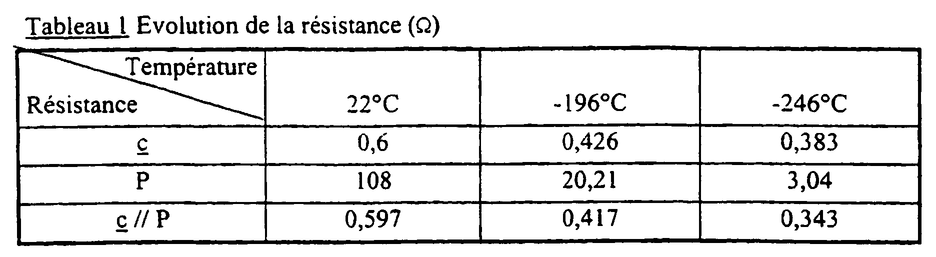

L'introduction du circuit de compensation 20 se traduit par un décalage du zéro du pont, décalage qui augmente lorsque la température décroît. Le tableau 2 ci-dessous donne la valeur du décalage ΔZ, mesuré en tension de sortie du pont, les jauges n'étant pas sous contrainte (avec des jauges de 800 Ω, un décalage de 6.4 Ω d'une jauge produit une tension de sortie de 20 mV lorsque le pont est alimenté sous 10 V). Les différents décalages ΔZ indiqués dans le tableau 2 correspondent à différentes valeurs du circuit de compensation et différentes températures. Les lignes du tableau montrent que le décalage peut être atténué en augmentant la valeur de R ou accentué en diminuant la valeur de P (en plaçant par exemple deux sondes de 100 Ω en parallèle). Le choix du circuit de compensation est donc fonction du degré de non-linéarité à corriger.

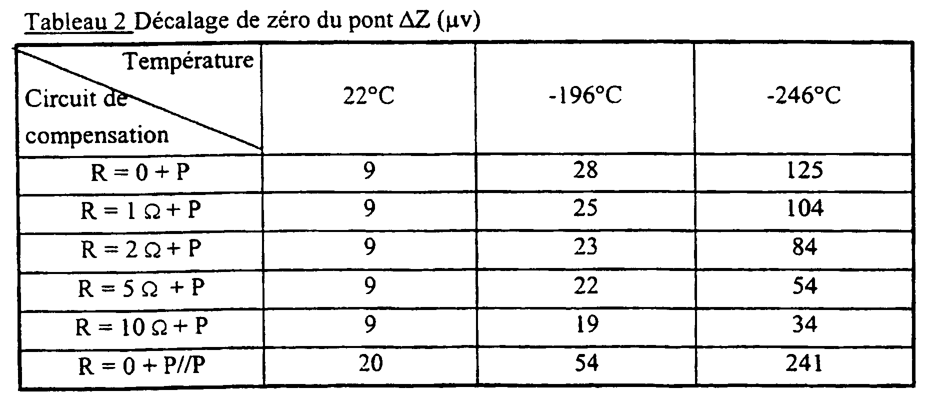

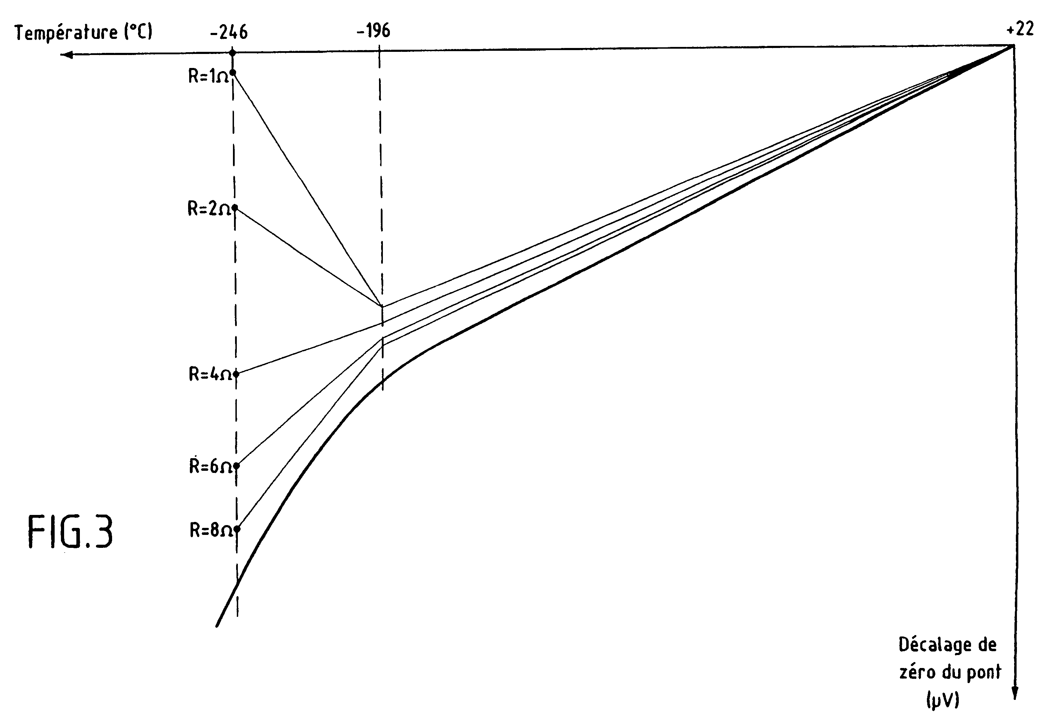

La figure 3 montre l'évolution de la tension recueillie entre les sommets +m, -m du pont, dans les mêmes conditions que pour la figure 1, à savoir absence de contraintes sur le capteur, zéro du pont réalisé à 22°C et pas de compensation linéaire, mais avec différents circuits de compensation 20 comprenant une résistance R en série avec deux sondes P en parallèle, chaque sonde P étant une sonde en platine de résistance égale à 100 Ω à 0°C.

On constate que, par rapport à la courbe I donnant l'évolution de la dérive de zéro en l'absence de circuit de compensation 20, la correction de non-linéarité est d'autant plus accentuée que la résistance de R est plus petite. Dans cet exemple, pour R = 4 Ω et avec deux sondes P en parallèle, la dérive de zéro du pont est linéarisée jusqu'à de très faibles températures (environ -250°C). Par l'action du réseau de compensation linéaire 12, il est alors possible de compenser totalement la dérive thermique de zéro du pont depuis la température ambiante jusqu'aux très basses températures (quelques Kelvin).

Dans ce qui précède, il est envisagé de connecter un circuit de compensation de non-linéarité de dérive sur un des brins de connexion reliant une jauge extensométrique d'une des branches du pont à un sommet de celui-ci. Il est envisageable, pour aboutir au même effet, de brancher un circuit de compensation de non-linéarité de dérive sur l'un et/ou l'autre des brins de connexion de cette branche du pont et/ou sur l'un et/ou l'autre des brins de connexion de la branche opposée.

Dans le cas de la figure 1, la non-linéarité évolue dans le même sens que la composante de dérive linéaire et aggrave celle-ci, mais elle pourrait dans d'autres cas évoluer dans l'autre sens. Selon le sens de cette évolution, le circuit de compensation est connecté soit sur l'une et/ou l'autre de deux branches opposées du pont, soit sur l'une et/ou l'autre des deux autres branches opposées du pont.

## Revendications

1. Capteur de pression susceptible d'être utilise dans un domaine de très basses températures, allant jusqu'à des températures inférieures à -196°C, et comportant des jauges extensométriques (J1-J4) montées respectivement dans les branches d'un pont de Wheatstone (10) et des brins de connexion (c) reliant chaque jauge extensométrique à deux sommets adjacents du pont et ayant des valeurs de résistance très inférieures à celles des jauges extensométriques, les jauges extensométriques (J1-J4) et les brins de connexion (c) étant constituées par des dépôts métalliques sur un substrat,
**caractérisé en ce qu'**il est en outre prévu un circuit de compensation de la non-linéarité de la dérive de zéro du pont dans ledit domaine de très basses températures, le circuit de compensation comprenant un élément résistif (P) qui est branché en parallèle sur un brin de connexion (c) entre une jauge extensométrique et un sommet du pont et dont la résistance varie en fonction de la température de manière à avoir une influence sensible et croissante sur la valeur de résistance du brin de connexion sur lequel il est branché en parallèle lorsque la température diminue, dans ledit domaine des très basses températures.

2. Capteur selon la revendication 1, **caractérisé en ce que** les brins de connexion (c) sont constitués par de l'or.

3. Capteur selon l'une quelconque des revendications 1 et 2, **caractérisé en ce que** le rapport entre la résistance dudit élément résistif (P) et celle de la résistance (c) sur laquelle il est branché en parallèle est au plus égal à 100 lorsque la température devient inférieure à -196°C et diminue ensuite lorsque la température décroît.

4. Capteur selon l'une quelconque des revendications 1 à 3, **caractérisé en ce que** ledit élément résistif (P) est formé par au moins une sonde en platine.

5. Capteur selon l'une quelconque des revendications 1 à 4, **caractérisé en ce que** ledit circuit de compensation (20) comprend une résistance de réglage (R) en série avec ledit élément résistif (P).

## Patentansprüche

1. Druckfühler, welcher geeignet ist, in einem Bereich sehr niedriger Temperaturen, der bis zu Temperaturen von unter -196°C reicht, eingesetzt zu werden und welcher Dehnungsmeßstreifen (J1-J4), die jeweils in den Zweigen einer Wheatstone-Brücke (10) angeordnet sind, sowie Verbindungsdrähte (c) umfaßt, die jeden Dehnungsmeßstreifen mit zwei benachbarten Spitzen der Brücke verbinden und die Widerstandswerte aufweisen, welche sehr viel geringer sind als diejenigen der Dehnungsmeßstreifen, wobei die Dehnungsmeßstreifen (J1-J4) und die Verbindungsdrähte (c) von Metallabscheidungen auf einem Substrat gebildet sind,
**dadurch gekennzeichnet, daß** außerdem eine Schaltung zur Kompensation der Nichtlinearität der Nulldrift der Brücke in dem genannten Bereich sehr niedriger Temperaturen vorgesehen ist, wobei die Kompensationsschaltung ein resistives Element (P) aufweist, das parallel zu einem Verbindungsdraht (c) zwischen einem Dehnungsmeßstreifen und einer Spitze der Brücke geschaltet ist und dessen Widerstand in Abhängigkeit von der Temperatur derart variiert, daß es einen deutlichen und zunehmenden Einfluß auf den Widerstandswert des Verbindungsdrahtes hat, zu dem es parallel geschaltet ist, wenn die Temperatur in dem genannten Bereich sehr niedriger Temperaturen sinkt.

2. Fühler nach Anspruch 1, **dadurch gekennzeichnet, daß** die Verbindungsdrähte (c) aus Gold bestehen.

3. Fühler nach irgendeinem der Ansprüche 1 und 2, **dadurch gekennzeichnet, daß** das Verhältnis zwischen dem Widerstand des resistiven Elements (P) und demjenigen des Widerstands (c), zu dem es parallel geschaltet ist, höchstens gleich 100 ist, wenn die Temperatur niedriger als -196°C wird, und anschließend geringer wird, wenn die Temperatur abnimmt.

4. Fühler nach irgendeinem der Ansprüche 1 bis 3, **dadurch gekennzeichnet, daß** das resistive Element (P) von wenigstens einer Platinsonde gebildet ist.

5. Fühler nach irgendeinem der Ansprüche 1 bis 4, **dadurch gekennzeichnet, daß** die genannte Kompensationsschaltung (20) einen Stellwiderstand (R) umfaßt, welcher mit dem resistiven Element (P) in Serie geschaltet ist.

## Claims

1. A pressure sensor likely to be used in a very low temperature range, including temperatures below -196°C, and comprising strain gauges (J1 to J4) mounted in respective arms of a Wheatstone bridge (10) and connection leads (c) connecting each strain gauge to two adjacent corners of the bridge and having resistances that are much less than those of the strain gauges, the strain gauges (J1 to J4) and the connection leads (c) being constituted by deposits of metal on a substrate,
the sensor being **characterised in that** a circuit is further provided for compensating non-linearity in zero drift of the bridge in said very low temperature range, with the compensation circuit comprising a resistive element (P) which is connected in parallel with a connection lead (c) between a strain gauge and a corner of the bridge and whose resistance varies as a function of temperature so as to influence the resistances of the connection lead with which it is connected in parallel, in said very low temperature range, in a manner that is sensitive to temperature and that increases with decreasing temperature.

2. A sensor according to claim 1, **characterised in that** the connection leads (c) are made of gold.

3. A sensor according to any one of claims 1 and 2, **characterised in that** the ratio of the resistance of said resistive element (P) to the resistance of the resistor (c) with which it is connected in parallel is no greater than 100 when the temperature drops below -196°C, and thereafter decreases with decreasing temperature.

4. A sensor according to any one of claims 1 to 3, **characterised in that** said resistive element (P) is constituted by at least one platinum probe.

5. A sensor according to any one of claims 1 to 4, **characterised in that** said compensation circuit (20) includes an adjustable resistor (R) connected in series with said resistive element (P).
